# EUROPÄISCHE PATENTANMELDUNG

(11) **EP 2 774 713 A1**
(43) Veröffentlichungstag der Anmeldung: **10.09.2014**
(21) Anmeldenummer: 13158185.2
(22) Anmeldetag: 07.03.2013
(51) Int. Cl.: B23K 26/06, B23K 26/067, B23K 26/34, B23K 26/00

(54) **Laserverfahren mit unterschiedlichen Laserstrahlbereichen innerhalb eines Strahls und Vorrichtungen**

(71) Anmelder: Siemens Aktiengesellschaft, 80333 München (DE)
(72) Erfinder: Bostanjoglo, Georg, 14163 Berlin (DE); Burbaum, Bernd, 14612 Falkensee (DE)

(57) **Zusammenfassung**

Durch die Verwendung eines Laserstrahls (1), der einen äußeren und einen inneren Laserstrahlbereich (4,7) aufweist mit unterschiedlichen Intensitäten kann ein höherer Temperaturgradient entlang der z-Richtung erzeugt werden.

## Beschreibung

Die Erfindung betrifft ein Laserverfahren, bei dem ein Laserstrahl verwendet wird, der zwei verschiedene Laserstrahlbereiche aufweist und Vorrichtungen dafür.

Laserschweißverfahren zum Umschmelzen von Rissen oder zum Auftragsschweißen auf ein Substrat sind Stand der Technik.

Generell besteht das Problem beim Schweißen darin, dass Risse zwischen Umschmelzgut oder Auftragsschweißung entstehen können.

Bisher wird dies dadurch gelöst, dass das gesamte Bauteil vorgeheizt wird.

Beim einkristallinen Umschweißen oder einkristallinen Auftragsschweißen ist es die Aufgabe einen großen Temperaturgradienten zu erzeugen.

Es ist daher Aufgabe der Erfindung ein Verfahren und Vorrichtungen aufzuzeigen, mit dem dies einfacher gestaltet werden kann.

Die Aufgabe wird gelöst durch ein Verfahren gemäß Anspruch 1 und eine Vorrichtung gemäß Anspruch 12 oder 13.

In den Unteransprüchen sind weitere vorteilhafte Maßnahmen aufgelistet, die beliebig miteinander kombiniert werden können, um weitere Vorteile zu erzielen.

Durch die Erfindung vereinfacht sich die operative und prozessuale Vorwärmung beim Schweißen und die Erzeugung größerer Temperaturgradienten.

Es zeigen:

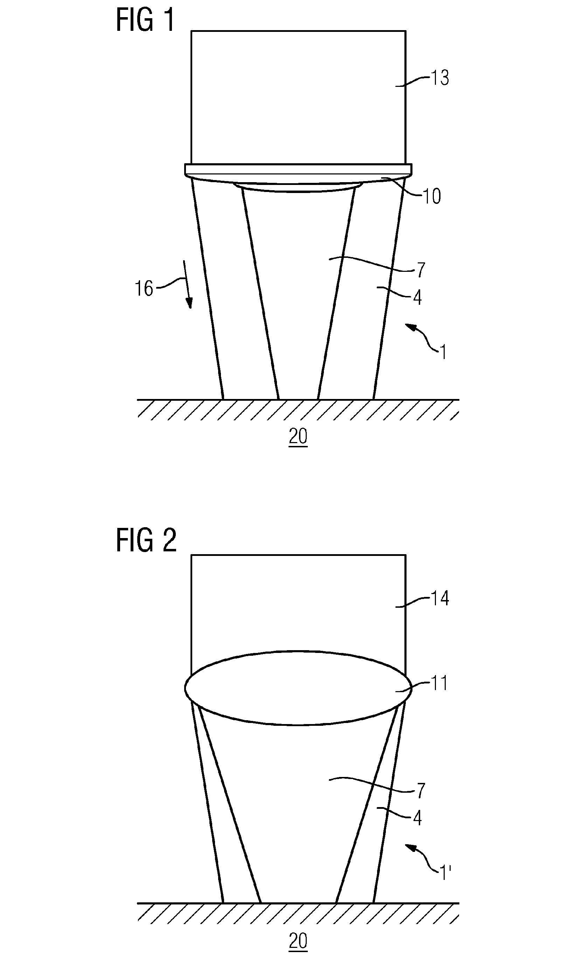

Figur 1, 2, 3 schematisch die Erfindung.

Die Figuren und die Beschreibung stellen nur Ausführungsbeispiele der Erfindung dar.

In der Figur 1 ist ein Laserstrahl 1 gezeigt, der beim Auftreffen auf ein Substrat 20 zwei verschiedene Laserstrahlbereiche 7, 4 aufweist.

Im Inneren ist ein innerer Laserstrahlbereich 7 vorhanden, der eine höhere Intensität oder Leistung vorzugsweise von 200W bis 300W aufweist und einen Riss im Substrat 20 umschmelzen kann oder Material für einen Auftragsprozess (nicht dargestellt) aufschmelzen kann.

Der innere Laserstrahlbereich 7 ist, vorzugsweise vollständig, umgeben von einem äußeren Laserstrahlbereich 4, der einen größeren Querschnitt, insbesondere einen größeren Durchmesser aufweist und eine geringere Intensität oder eine geringere Leistung aufweist, so dass der äußere Laserstrahlbereich 4 den Bereich vor und hinter dem inneren Laserstrahlbereich 7 nur vor- und nachwärmt, wenn der Laserstrahl 1 über das Substrat 20 verfahren wird.

Vorzugsweise beträgt der Durchmesser des inneren Laserstrahlbereichs 7 3mm und der des äußeren Laserstrahlbereichs 4 beträgt mindestens 3,5mm, insbesondere mindestens 4mm, ganz insbesondere 4mm.

Der innere Bereich 7 ist vorzugsweise konzentrisch im äußeren Bereich 4 angeordnet.

Ein solcher Laserstrahl 1 kann vorzugsweise durch eine bifokale Linse 10 erzeugt werden, bei dem ein Laserstrahl 13 mit einer einzigen Wellenlänge λ durch die bifokale Linse 10 entsprechend in einem inneren 7 und äußeren 4 Laserstrahlbereich separiert wird.

Mit dem Pfeil 16 ist angedeutet, dass an dieser Stelle Material zugeführt werden kann, das durch den Laserstrahl 1, insbesondere durch den inneren Laserstrahlbereich 7, aufgeschmolzen wird und zur Auftragsschweißung führt.

Eine weitere Möglichkeit zur Erzeugung eines solchen Laserstrahls 1' besteht gemäß Figur 2 darin, dass ein ankommender Laserstrahl 14 zwei verschiedene Wellenlängen λ₁, λ₂ aufweist, die durch eine einzige Linse 11 unterschiedliche stark gebrochen werden und so die unterschiedlichen Laserstrahlbereiche 7, 4 erzeugt.

Durch diese Intensitätsverteilung gemäß Figur 1, 2 wird der Temperaturgradient senkrecht zum Substrat 20 erhöht und ein solcher Laserstrahl 1, 1' kann vorzugsweise beim einkristallinen Umschmelzen oder Auftragsschweißen verwendet werden.

Ein Beispiel für ein Substrat, das eine gerichtet erstarrte Struktur aufweisen, ist PWA 1483SX, das eine einkristalline Struktur ergibt.

Das Verhältnis der Intensitäten oder der Leistungen der Laserstrahlbereiche 4, 7 zueinander beträgt mindestens 1,2, insbesondere mindestens 1,5.

Die Fläche des inneren Laserstrahlbereichs 7 beträgt vorzugsweise maximal 80% des inneren 7 und äußeren Laserstrahlbereich 4.

Durch diesen Aufbau gemäß Figur 1 oder 2 ist eine sehr einfache Handhabung möglich und es entsteht auch keine Richtungsabhängigkeit durch die Verwendung einer Optik.

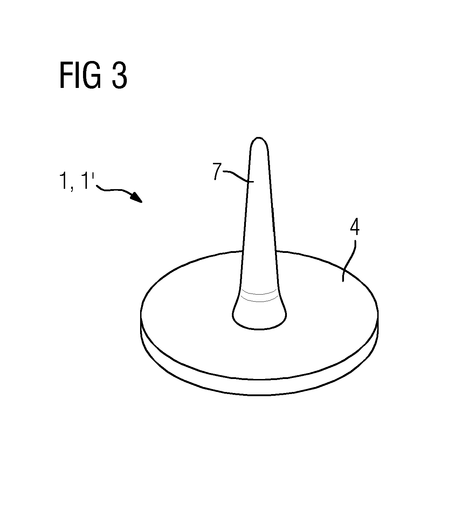

In Figur 3 ist eine erfindungsgemäße Intensitätsverteilung gezeigt.

Der innere Laserstrahlbereich 7 ist konzentrisch innerhalb des äußeren Laserstrahlbereichs 4 angeordnet.

## Patentansprüche

1. Verfahren
zur Laserbearbeitung eines Substrats (20),
insbesondere Schweißen eines Substrat (20),
bei dem ein Riss umgeschmolzen oder
Material aufgetragen wird,
**dadurch kennzeichnet, dass**
ein Laserstrahl (1, 1') verwendet wird,
der in sich zwei verschiedene Laserstrahlbereiche (4, 7) aufweist,
wobei sich die verschiedenen Laserstrahlbereiche (4, 7) zumindest in der Leistung der Laserstrahlbereiche (4, 7) und/oder der Wellenlängen der Laserstrahlbereiche (4, 7) unterscheiden.

2. Verfahren nach Anspruch 1,
bei dem der Laserstrahl (1, 1') einen inneren Laserstrahlbereich (7) aufweist,
der umgeben ist von einem äußeren Laserstrahlbereich (4), insbesondere vollständig umgeben ist vom äußeren Laserstrahlbereich (4).

3. Verfahren nach einem oder beiden der Ansprüche 1 oder 2, bei dem der äußere Laserstrahlbereich (7) nicht zur Aufschmelzung des Substrats (20) oder aus zugeführtem Material führt.

4. Verfahren nach einem oder mehreren der Ansprüche 1, 2 oder 3,
bei dem ein metallisches Substrat (20) behandelt wird.

5. Verfahren nach einem oder mehreren der Ansprüche 1, 2, 3 oder 4,
bei dem ein Riss umgeschmolzen wird.

6. Verfahren nach einem oder mehreren der Ansprüche 1, 2, 3 oder 4,
bei dem eine Auftragsschweißung stattfindet.

7. Verfahren nach einem oder mehreren der Ansprüche 2 bis 6,
bei dem der innere Laserstrahlbereich (4) innerhalb des äußeren Laserstrahlbereichs (4) konzentrisch angeordnet ist.

8. Verfahren nach einem oder mehreren der Ansprüche 1 bis 7,
bei dem eine Intensität oder eine Leistung des inneren Laserstrahlbereichs (7) mindestens 20% größer ist, insbesondere mindestens 50% größer ist,
als eine Intensität oder eine Leistung des äußeren Laserstrahlbereichs (4)
und zu einer stärkeren Erwärmung des Substrats (20) oder zur Aufschmelzung von Material oder des Substrats (20) führt.

9. Verfahren nach einem oder mehreren der Ansprüche 1 bis 8,
bei dem der innere Laserstrahlbereich (7) eine Leistung von 200W bis 300W aufweist,
insbesondere bei einem Durchmesser von 3mm.

10. Verfahren nach einem oder mehreren der Ansprüche 1 bis 9,
bei dem der Durchmesser des äußeren Laserstrahlbereichs (4) mindestens 3,5mm,
insbesondere mindestens 4mm,
ganz insbesondere 4mm
beträgt.

11. Verfahren nach einem oder mehreren der Ansprüche 1 bis 10,
bei dem der innere Laserstrahlbereich (7) auf dem Substrat (20) maximal 80% der Fläche des äußeren Laserstrahlbereichs (4) auf dem Substrat (20) beträgt.

12. Vorrichtung (1)
zur Erzeugung eines Laserstrahls (1, 1') mit zwei Laserstrahlbereichen (4, 7) zum Umschmelzen oder Auftragsschweißen,
insbesondere zur Durchführung eines Verfahrens nach einem oder mehreren der Ansprüche 1 bis 11,
die (1) eine bifokale Linse (10) aufweist,
die (10) einen Laserstrahl (13) mit einer Wellenlänge (λ) in zwei Laserstrahlbereiche (7, 4) separieren kann, insbesondere in einem inneren Laserstrahlbereich (7) und einem äußeren Laserstrahlbereich (4).

13. Vorrichtung (1)
zur Erzeugung eines Laserstrahls (1) mit zwei Laserstrahlbereichen (4, 7) zum Umschmelzen oder Auftragsschweißen,
insbesondere zur Durchführung eines Verfahrens nach einem oder mehreren der Ansprüche 1 bis 11,
die (1) einen Laserstrahl (14) mit zwei Wellenlängen (λ₁, λ₂) erzeugen kann,
die (1) eine einzige Linse (11) aufweist,
die den auf die Linse (11) auftreffenden Laserstrahl (14) mit zwei verschiedene Wellenlängen (λ₁, λ₂) aufspalten kann in zwei Laserstrahlbereiche (7, 4),
insbesondere in einem inneren Laserstrahlbereich (7) und einem äußeren Laserstrahlbereich (4).
